# FASCICULE DE BREVET EUROPEEN

(11) **EP 4 345 322 B1**
(45) Date de publication et mention de la délivrance du brevet: **24.06.2026**
(21) Numéro de dépôt: 23199466.6
(22) Date de dépôt: 25.09.2023
(51) Int. Cl.: F16B 25/00, F16B 35/06

(54) **ELÉMENT DE FIXATION AMÉLIORÉ POUR LA FIXATION DE STRUCTURES DANS DES ARBRES**
VERBESSERTES BEFESTIGUNGSELEMENT ZUR BEFESTIGUNG VON STRUKTUREN IN BÄUMEN
IMPROVED FASTENER FOR FASTENING STRUCTURES IN SHAFTS

(30) Priorité: 27.09.2022 FR 2209792
(43) Date de publication de la demande: 03.04.2024
(73) Titulaire: LE CLOU S.V.A., 05100 Briancon (FR)
(72) Inventeur: CAVALLARO, Laurent, 05100 BRIANCON (FR); CARRE, Guillaume, 69210 Bully (FR); ROLLE, Pierre, François, Hervé, 80260 Molliens Au Bois (FR)
(74) Mandataire: Cabinet Beau de Loménie

(56) Documents cités:
- EP-A2- 1 783 289
- US-A- 4 636 125
- US-A- 5 755 542
- US-A1- 2006 198 717

## Description

### Domaine Technique

Le présent exposé concerne un élément de fixation pour des équipements et structures destinés à être fixés sur des arbres.

### Technique antérieure

La fixation ou l'ancrage de structures dans des arbres répond à des contraintes et problématiques spécifiques, à la fois en termes de sécurité et de tenue structurelle, mais également en termes de respect des arbres dans lesquels les éléments de fixation ou d'ancrage sont implantés.

Ainsi, les éléments de fixation ou d'ancrage destinés à être implantés dans les arbres pour le support de structures ou d'éléments de liaison doivent notamment être réalisés de manière à ne pas dégrader l'arbre, mais également de manière à en permettre la croissance, tout en répondant à des contraintes strictes en termes de sécurité. Le document US5755542 présente un exemple d'élément de fixation dans un support métallique pour un support anti-incendie.

Le document US 4636125 A décrit un dispositif de montage destiné à fixer sur un arbre ou analogue un élément muni d'une tige de montage filetée pour machine, ledit dispositif comprenant un corps allongé présentant, à une extrémité, une vis à bois filetée extérieurement et, à son autre extrémité, un trou borgne, des filetages pour machine à l'intérieur dudit trou borgne, et un moyen de préhension fixé audit corps pour faciliter la fixation dudit corps sur un arbre ou analogue, ledit corps comportant deux parties, une première partie comprenant ladite vis à bois et une extrémité filetée, l'autre partie étant un adaptateur vissé sur ladite extrémité filetée et comprenant lesdits filetages pour machine, un perçage traversant dans chacune desdites parties, ledit moyen de préhension comprenant une goupille traversant lesdits perçages traversants dans les parties afin de maintenir les parties assemblées tout en servant de poignée.

La présente invention vise ainsi à répondre au moins partiellement à ces problématiques.

### Exposé de l'invention

La présente invention concerne ainsi un élément de fixation adapté pour être partiellement inséré dans un arbre, comprenant un corps s'étendant selon une direction longitudinale définie par un axe longitudinal, ledit corps comprenant successivement, depuis une extrémité proximale vers une extrémité distale selon la direction longitudinale : une portion filetée, adaptée pour être insérée dans un tronc d'arbre, un collet et un écrou, l'élément de fixation comprenant un taraudage s'étendant depuis l'extrémité distale dans un volume interne de l'écrou et dans un volume interne du collet, l'élément de fixation étant formé en une seule pièce.

Dans l'élément de fixation selon l'invention :
- la portion filetée présente un diamètre maximum D1 par rapport à l'axe longitudinal,
- le collet présente une section de diamètre compris entre D32 et D34 selon l'axe longitudinal, tels que D32≤D34, et D32 > 1,3 D1,
l'écrou présente une section selon un plan perpendiculaire à l'axe longitudinal inscrite dans un polygone régulier, ledit polygone régulier étant inscrit dans un cercle de diamètre D4, tel que D4 < D34, et D4 > D1.

Le collet présente une forme cylindrique de révolution, tel que D32 = D34.

En alternative, le collet présente une forme conique de révolution, tel que D32 < D34, le collet présentant une section croissante depuis une extrémité proximale de diamètre D32 vers une extrémité distale de diamètre D34.

Selon un exemple, la portion filetée comprend un filetage comprenant une pluralité de filets séparés par une gorge, le filetage présentant un pas compris entre 7 et 11 mm,
lesdits filets présentant une forme triangulaire avec un sommet définissant un angle compris entre 35 et 45°,
la gorge entre deux filets successifs s'étendant selon une distance supérieure ou égale à 3mm,
chaque gorge entre deux filets successifs présentant deux pans inclinés définissant un angle compris entre 165° et 175°.

Selon un mode de réalisation particulier,
le filetage présentant un pas de 9 mm,
lesdits filets présentant une forme triangulaire avec un sommet définissant un angle égal à 40°,
la gorge entre deux filets successifs s'étendant selon une distance comprise entre 5 et 6 mm,
chaque gorge entre deux filets successifs présentant deux pans inclinés définissant un angle égal à 170°.

Le présent exposé concerne également un ensemble comprenant :
- un élément de fixation tel que défini précédemment,
- un élément de liaison, présentant un corps s'étendant selon une direction longitudinale définie par un axe longitudinal, ledit corps comprenant successivement, depuis une extrémité proximale vers une extrémité distale selon la direction longitudinale
   * une portion filetée adaptée pour être engagée dans le taraudage de l'élément de fixation,
   * un collet,
   * un portion fonctionnelle,
   ledit élément de liaison étant formé en une seule pièce,
- une bague, adaptée pour venir envelopper partiellement la portion filetée de l'élément de fixation.

Le présent exposé concerne également un ensemble comprenant :
- un élément de fixation selon l'une des revendications précédentes,
- une première bague, adaptée pour venir envelopper l'écrou de l'élément de fixation,
- une rallonge, présentant un corps s'étendant selon une direction longitudinale définie par un axe longitudinal, ledit corps comprenant successivement, depuis une extrémité proximale vers une extrémité distale selon la direction longitudinale : une portion filetée, un collet et un écrou,
dans lequel
la portion filetée de la rallonge est adaptée pour être engagée dans le taraudage de l'élément de fixation,
le collet de l'élément de fixation, le collet de la rallonge et la première bague présentent
une même section externe.

Selon un exemple, la rallonge présente un taraudage s'étendant depuis l'extrémité distale dans un volume interne de l'écrou et dans un volume interne du collet.

Le présent exposé concerne également un tel ensemble, comprenant en outre
- un élément de liaison, présentant un corps s'étendant selon une direction longitudinale définie par un axe longitudinal, ledit corps comprenant successivement, depuis une extrémité proximale vers une extrémité distale selon la direction longitudinale
   * une portion filetée adaptée pour être engagée dans le taraudage de la rallonge,
   * un collet,
   * un portion fonctionnelle,
   ledit élément de liaison étant formé en une seule pièce,
- une deuxième bague, adaptée pour venir envelopper partiellement la portion filetée de l'élément de fixation.

### Brève description des dessins

L'invention et ses avantages seront mieux compris à la lecture de la description détaillée faite ci-après de différents modes de réalisation de l'invention donnés à titre d'exemples non limitatifs.
[Fig. 1] La figure 1 présente un élément de fixation selon un aspect de l'invention.
[Fig. 2] La figure 2 représente un élément de fixation associé à un élément de liaison.
[Fig. 3] La figure 3 représente un élément de fixation associé à un élément de liaison.
[Fig. 4] La figure 4 est une vue en coupe partielle d'un élément de fixation associé à un une rallonge.
[Fig. 5] La figure 5 représente une bague pour élément de fixation selon un aspect de l'invention.
[Fig. 6] La figure 6 est une vue en coupe partielle qui représente l'association entre un élément de fixation, une bague et une rallonge en vue éclatée.
[Fig. 7] La figure 7 est une vue en coupe partielle qui représente l'association entre un élément de fixation, une bague et une rallonge.
[Fig. 8] La figure 8 présente un exemple de filetage pour l'élément de fixation.
[Fig. 9] La figure 9 présente une variante de la figure 1.

Sur l'ensemble des figures, les éléments en commun sont repérés par des références numériques identiques.

### Description des modes de réalisation

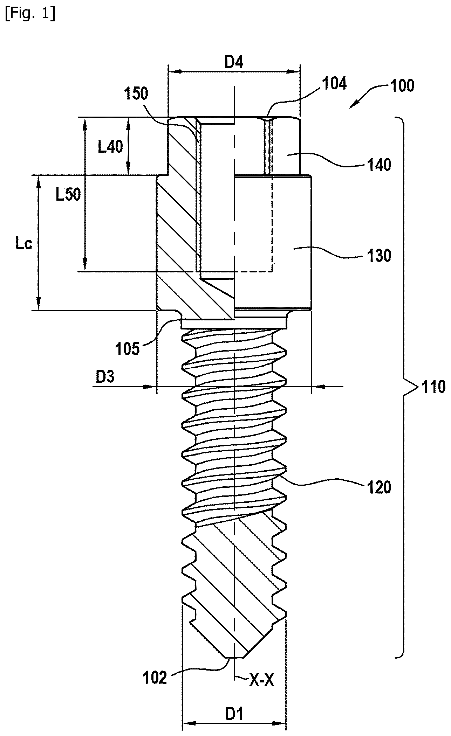

On décrit à présent un élément de fixation et les éléments associés en référence aux figures 1 à 8.

On représente sur les figures un élément de fixation 100 qui comprend un corps 10 s'étendant selon une direction longitudinale définie par un axe longitudinal X-X. Dans la description qui suit, les éléments s'étendant axialement seront compris comme étant des éléments s'étendant selon l'axe longitudinal X-X, et les éléments s'étendant radialement seront compris comme étant des éléments s'étendant radialement par rapport à l'axe longitudinal X-X.

On définit de manière arbitraire pour le corps 110 une extrémité proximale 102 et une extrémité distale 104 selon l'axe longitudinal X-X, ces désignations étant purement arbitraires. Les extrémités proximales et distales des différents éléments seront par la suite définies par rapport à ces deux extrémités du corps 110.

L'élément de fixation 100 comprend successivement, depuis son extrémité proximale 102 vers son extrémité distale 104, une première portion filetée 120, un collet 130 et un écrou 140. L'élément de fixation 100 est formé en une seule pièce, par exemple en une seule pièce venue de matière par moulage et par usinage.

De manière optionnelle, l'élément de fixation 100 comprend une portion de transition 105 interposée entre la première portion filetée 120 et le collet 130. La portion de transition 105 forme typiquement un arrondi ayant un rayon compris entre 1 et 4 mm, typiquement entre 1 et 3 mm, ou égal à 2 mm. Une telle portion de transition 105 permet d'améliorer la tenue mécanique de l'élément de fixation 100, en évitant la formation d'amorces de rupture entre ces deux régions ayant des diamètres distincts.

La première portion filetée 120 comprend un filetage adapté pour permettre son insertion dans un matériau de type bois, typiquement dans un tronc d'arbre.

La première portion filetée 20 présente typiquement une longueur selon la direction axiale comprise entre 70 mm et 160 mm, par exemple entre 80 mm et 130 mm, ou plus précisément entre 85 et 100 mm, ou encore égale à 90mm.

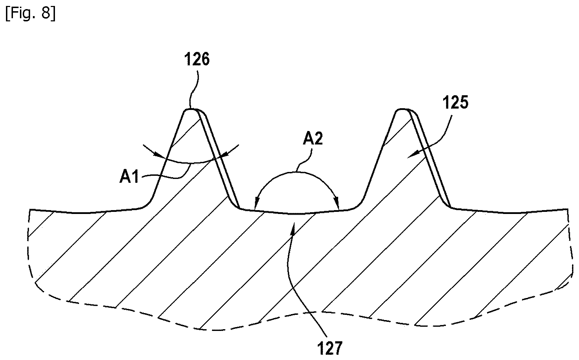

La figure 8 présente un exemple de filetage pouvant être employé pour la réalisation de la première portion filetée 120.

Le premier filetage 120 tel que proposé présente typiquement un diamètre maximum D1 compris entre 25 et 35 mm, typiquement égal à 29mm et un diamètre minimum compris entre 15 et 25 mm, typiquement égal à 20 mm.

Les filets 125 présentent une section triangulaire avec un sommet 126 tronqué. Contrairement aux filetages conventionnels, les filets 125 présentent ici une section de triangle dont l'angle A1 au sommet 126 est compris entre 35° et 45°, typiquement égal à 40°.

Le sommet 126 des dents est ainsi tronqué, et définit une surface plane ayant par exemple une longueur de l'ordre de 0,2 à 0,7 mm ou égale à 0,5 mm selon l'axe longitudinal X-X.

Le filetage tel que proposé présente typiquement un pas compris entre 7 et 11 mm, par exemple égal à 9 mm.

Les filets 125 successifs sont séparés par des gorges 127 qui présentent deux pans inclinés de manière à définir un angle A2 compris entre 165 et 175°, typiquement égal à 170°. La réalisation de gorges au lieu de sections planes entre les différents filets améliore l'évacuation des copeaux.

Le filetage tel que proposé présente pénétration et une tenue améliorées dans le bois et notamment dans un arbre.

Le collet 130 présente une forme cylindrique, typiquement une forme cylindrique de révolution de diamètre D3 autour de l'axe longitudinal X-X. Le collet 130 présente un diamètre D3 est strictement supérieur à D1, par exemple tel que D3 > 1,3 D1, ou encore D3 > 1,5 D1. Le diamètre D3 est typiquement compris entre 30 mm et 80 mm, ou encore entre 30 mm et 70 mm, ou plus précisément entre 30 mm et 60 mm, ou par exemple égal à 40 mm.

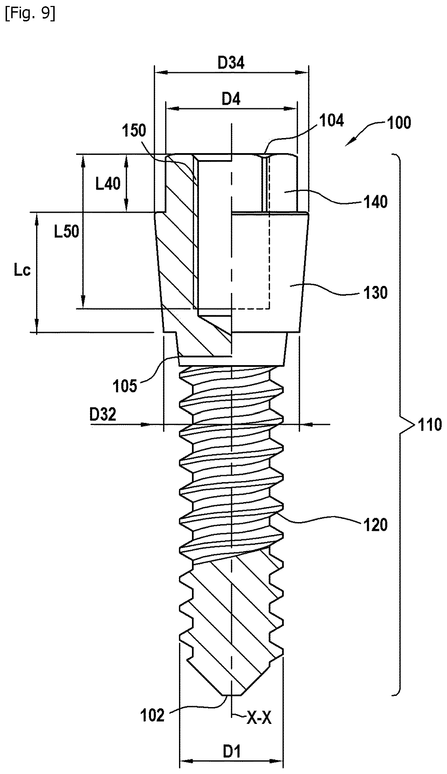

De manière alternative, le collet 130 peut présenter une forme conique ou tronconique. Selon un exemple, le collet 130 peut présenter une forme de tronc de cône, avec une section croissante depuis une section de diamètre D32 à une section de diamètre D34 depuis son extrémité proximale 102 vers son extrémité distale 104. Dans un tel mode de réalisation, le diamètre D34 est strictement supérieur à D1, par exemple tel que D34 > 1,3 D1, ou encore D34 > 1,5 D1. Le diamètre D34 est typiquement compris entre 30 mm et 80 mm, ou encore entre 30 mm et 70 mm, ou plus précisément entre 30 mm et 60 mm, ou par exemple égal à 40 mm. Le diamètre D32 est strictement inférieur à D34, et est tel que D32 > D1. Le diamètre D32 est typiquement compris entre 30 et 40 mm. Une telle forme permet d'améliorer la tenue en cisaillement, et réduit les contraintes appliquées dans l'arbre. La figure 9 représente un tel mode de réalisation.

Le collet 130 présente typiquement une longueur Lc selon la direction axiale, typiquement comprise entre 25 mm et 70 mm, ou par exemple entre 25 mm et 50 mm, ou encore entre 30 mm et 40 mm, ou par exemple égale à 35 mm.

L'écrou 140 présente typiquement une section selon un plan perpendiculaire à l'axe longitudinal X-X définissant un polygone régulier, par exemple un hexagone régulier, qui peut par exemple présenter des arrêtes tronquées ou arrondies, ledit polygone régulier étant typiquement inscrit dans un cercle de diamètre D4 strictement inférieur à D3, par exemple tel que D3 > 1,1 D4, ou D3 > 1,2 D4. Le diamètre D4 est typiquement compris entre 20 et 60 mm, par exemple entre 25 et 50 mm, ou entre 30 et 40 mm, ou par exemple égal à 34 mm.

L'écrou 140 présente typiquement une longueur L40 selon la direction axiale comprise entre 10 mm et 30 mm, ou encore entre 10 mm et 20 mm, ou par exemple égale à 15 mm.

L'élément de fixation 100 comprend également un taraudage 150 interne, s'étendant depuis l'extrémité distale 104 dans un volume interne de l'écrou 140 et dans un volume interne du collet 130.

Le taraudage 150 s'étend typiquement sur une longueur (ou profondeur) L50 selon la direction axiale comprise entre 30 et 60 mm, on entre 30 et 50 mm, par exemple égale à 40mm. Le taraudage 150 est typiquement du type M20-6H, ou plus généralement de tout type adapté pour permettre le vissage d'un élément complémentaire comme on le décrira par la suite.

On décrit à présent les fonctions et l'utilisation de l'élément de fixation 100 tel que présenté.

L'élément de fixation 100 est adapté pour être inséré par exemple dans un arbre, par exemple pour le soutien d'une structure ou d'un équipement.

La première portion filetée 120 est insérée dans un arbre, par vissage, notamment au moyen d'un outil engageant l'écrou 140.

L'élément de fixation 100 est ainsi inséré dans l'arbre jusqu'à ce que le collet 130 soit au moins partiellement inséré dans l'arbre.

Afin de faciliter l'insertion, un pré-perçage est typiquement réalisé au préalable dans le tronc de l'arbre, au moyen d'un foret ayant deux sections distinctes ; une première section ayant un diamètre strictement inférieur à D1 et formant un pré-perçage pour la première portion filetée 120, et une seconde section ayant un diamètre égal à D3, pour former un logement recevant le collet 130.

Ainsi, l'écrou 140 et le cas échéant une portion du collet 30 demeurent à l'extérieur du tronc de l'arbre. Le fait de maintenir une portion du collet 130 à l'extérieur du tronc de l'arbre permet de prendre en compte une croissance de l'arbre, et donc une augmentation de son diamètre, qui vient ainsi progressivement recouvrir le reste du collet 130, tout en maintenant l'écrou 140 accessible afin de permettre un éventuel retrait de l'élément de fixation 100.

L'élément de fixation 100 tel que présenté peut être associé à différents autres éléments.

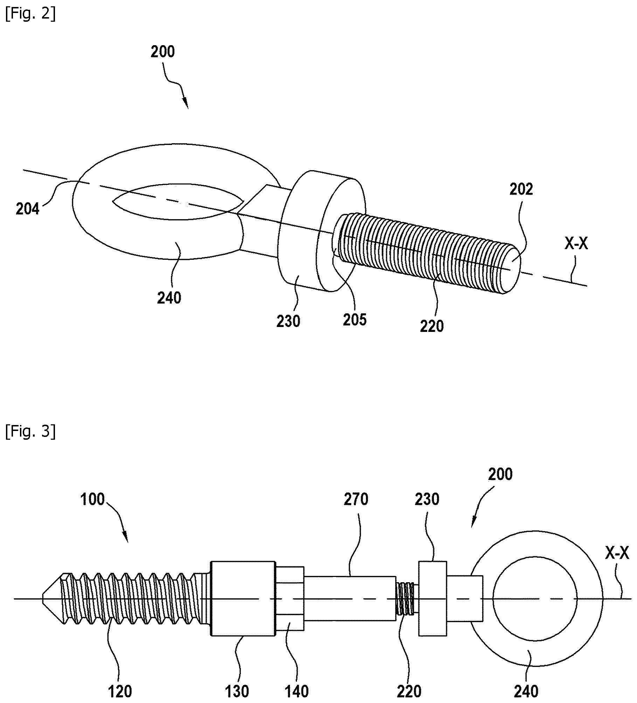

On représente sur les figures 2 et 3 l'association de l'élément de fixation 100 avec un élément de liaison 200.

L'élément de liaison 200 tel que représenté présente un corps s'étendant selon une direction longitudinale définie par un axe longitudinal (X-X). On définit arbitrairement à des fins de description une extrémité proximale 202 et une extrémité distale 204.

L'élément de liaison 200 présente successivement, depuis son extrémité proximale 202 vers son extrémité distale 204 selon la direction longitudinale X-X : une portion filetée adaptée 220 pour être engagée dans le taraudage 150 de l'élément de fixation 100, un collet 230, et un anneau 240. L'élément de liaison 200 est typiquement formé en une seule pièce, par exemple en une seule pièce venue de matière par moulage et par usinage.

La portion filetée 220 comprend typiquement un filetage complémentaire au taraudage 150.

Le collet 230 présente une forme cylindrique, typiquement une forme cylindrique de révolution, typiquement de diamètre identique au diamètre du collet 130 de l'élément de fixation 100.

De manière optionnelle, l'élément de liaison 200 comprend une portion de transition 205 interposée entre la première portion filetée 220 et le collet 230. La portion de transition 205 forme typiquement un arrondi ayant un rayon compris entre 1 et 4 mm, typiquement entre 1 et 3 mm, ou égal à 2 mm. Une telle portion de transition 105 permet d'améliorer la tenue mécanique de l'élément de fixation 10, en évitant la formation d'amorces de rupture entre ces deux régions ayant des diamètres distincts.

L'anneau 240 est illustré à titre d'exemple. Il s'agit plus généralement d'une portion fonctionnelle 240 de l'élément de liaison 200, notamment pour permettre la fixation de structures ou le passage de cordages.

L'élément de liaison 200 est typiquement vissé dans l'élément de fixation 100 une fois ce dernier inséré dans un support tel qu'un arbre. L'élément de liaison 200 peut être remplacé si nécessaire, en conservant l'élément de fixation 100 ancré dans le support, ce qui permet ainsi de préserver le support.

La figure 3 présente ainsi un exemple d'élément de liaison 200 associé à un élément de fixation 100. Dans cet exemple, un cache 270 a été positionné autour de la portion filetée 220 de l'élément de liaison 200, ce qui permet ainsi de masquer la partie de la portion filetée 220 qui demeure en dehors de l'élément de fixation 100 dans le cas où la portion filetée 220 a une longueur supérieure à la longueur L50 ou profondeur du taraudage 150. Un tel cache 270 permet ainsi de préserver la portion filetée 220. Le cache 270 est typiquement un manchon cylindrique de révolution, présentant un diamètre interne supérieur ou égal au diamètre externe de la portion filetée 220 de l'élément de liaison 220, et présentant un diamètre externe typiquement inférieur ou égal au diamètre externe du collet 230 de l'élément de liaison 200.

Selon un mode de réalisation, le cache 270, le collet 230 de l'élément de liaison 200 et le collet 130 de l'élément de fixation 100 présentent une même section externe, de manière à définit une surface continue et uniforme ou sensiblement uniforme, aux chanfreins et arrondis près. Le cache 270 présente alors typiquement un diamètre interne adapté pour venir être emmanché autour de l'écrou 140 de l'élément de fixation 100 d'une manière similaire à la bague 400 que l'on décrit ci-après.

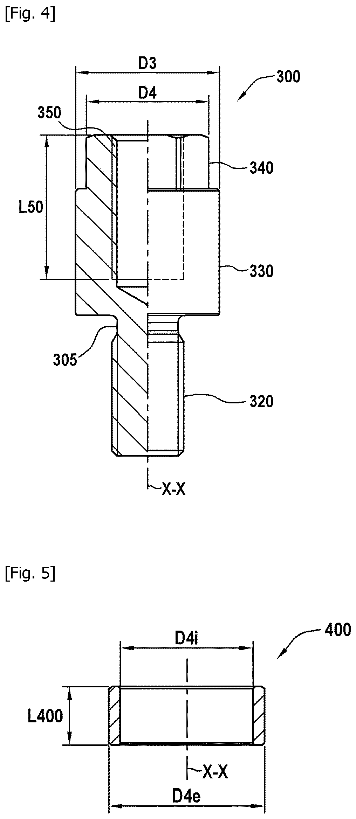

Les figures 4, 5, 6 et 7 présentent deux autres éléments pouvant être associés à l'élément de fixation 100.

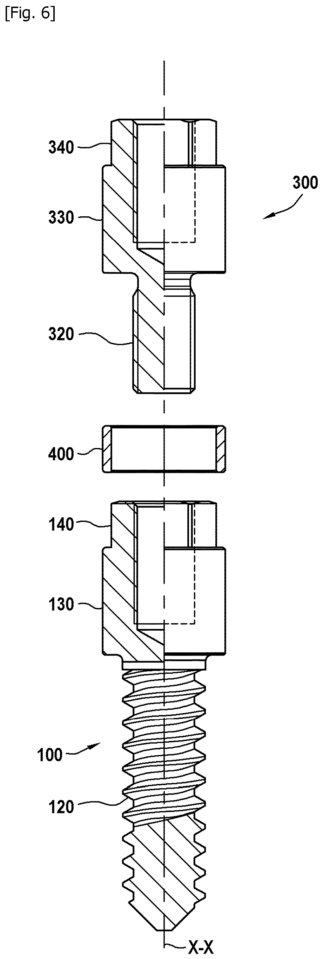

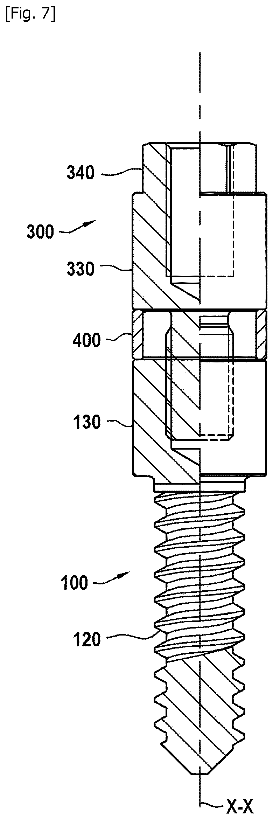

Les éléments tels que présenté comprennent une rallonge 300 représentée sur la figure 4, et une bague représentée sur la figure 5. Les figures 6 et 7 représentent l'association avec l'élément de fixation 100.

La rallonge 300 telle que représentée isolément sur la figure 4 est un élément adapté pour être inséré dans l'élément de fixation 100 afin notamment de prendre en compte la croissance de l'arbre dans lequel l'élément de fixation 100 est inséré.

La rallonge 300 tel que représentée présente un corps s'étendant selon une direction longitudinale définie par un axe longitudinal (X-X). On définit arbitrairement à des fins de description une extrémité proximale 302 et une extrémité distale 304.

La rallonge 300 présente successivement, depuis l'extrémité proximale 302 vers l'extrémité distale 304 selon la direction longitudinale : une portion filetée 320, un collet 330 et un écrou 340. Un taraudage 350 interne, s'étend depuis l'extrémité distale 304 dans un volume interne de l'écrou 340 et dans un volume interne du collet 330. La rallonge 300 est typiquement formée en une seule pièce, par exemple en une seule pièce venue de matière par moulage et par usinage.

La portion filetée 320 est adaptée pour être engagée dans le taraudage 150, on dans le taraudage 350 d'une rallonge 300 lorsque plusieurs rallonges 300 sont utilisées successivement comme on le verra par la suite.

Le collet 330 présente une forme cylindrique, typiquement une forme cylindrique de révolution, typiquement de diamètre identique au diamètre D3 du collet 130 de l'élément de fixation 100. Ainsi, le collet 330 présente une forme cylindrique, typiquement une forme cylindrique de révolution de diamètre D3 autour de l'axe longitudinal X-X. Le collet 130 présente un diamètre D3 est strictement supérieur à D1, par exemple tel que D3 > 1,3 D1, ou encore D3 > 1,5 D1. Le diamètre D3 est typiquement compris entre 30 mm et 80 mm, ou encore entre 30 mm et 70 mm, ou plus précisément entre 30 mm et 60 mm, ou par exemple égal à 40 mm. Le collet 330 présente typiquement une longueur Lc selon la direction axiale, typiquement comprise entre 25 mm et 70 mm, ou par exemple entre 25 mm et 50 mm, ou encore entre 30 mm et 40 mm, ou par exemple égale à 35 mm.

L'écrou 340 présente typiquement une géométrie identique à l'écrou 140 de l'élément de fixation 100. Ainsi, l'écrou 340 présente typiquement une section selon un plan perpendiculaire à l'axe longitudinal X-X définissant un polygone régulier, par exemple un hexagone régulier, qui peut par exemple présenter des arrêtes tronquées ou arrondies, ledit polygone régulier étant typiquement inscrit dans un cercle de diamètre D4 strictement inférieur à D3, par exemple tel que D3 > 1,1 D4, ou D3 > 1,2 D4. Le diamètre D4 est typiquement compris entre 20 et 60 mm, par exemple entre 25 et 50 mm, ou entre 30 et 40 mm, ou par exemple égal à 34 mm. L'écrou 340 présente typiquement une longueur L40 selon la direction axiale comprise entre 10 mm et 30 mm, ou encore entre 10 mm et 20 mm, ou par exemple égale à 15 mm. L'écrou 340 permet le vissage de la rallonge 300 typiquement au moyen d'un outil engageant l'écrou 340. au moyen d'un outil tel qu'une clé.

Le taraudage 350 présente typiquement une géométrie identique à celle du taraudage 150 de l'élément de liaison 100. Ainsi, le taraudage 350 s'étend typiquement sur une longueur (ou profondeur) L50 selon la direction axiale comprise entre 30 et 60 mm, on entre 30 et 50 mm, par exemple égale à 40mm. Le taraudage 350 est typiquement du type M20-6H, ou plus généralement de tout type adapté pour permettre le vissage d'un élément complémentaire comme on le décrira par la suite.

De manière optionnelle, la rallonge 300 comprend une portion de transition 305 interposée entre la portion filetée 320 et le collet 330. La portion de transition 305 forme typiquement un arrondi ayant un rayon compris entre 1 et 4 mm, typiquement entre 1 et 3 mm, ou égal à 2 mm. Une telle portion de transition 305 permet d'améliorer la tenue mécanique de la rallonge 300, en évitant la formation d'amorces de rupture entre ces deux régions ayant des diamètres distincts. De manière alternative, la portion de transition peut présenter une portion de cône ou de tronc de cône, avec une section croissante depuis son extrémité proximale vers son extrémité distale, son extrémité distale ayant typiquement une section inférieure à la section de l'extrémité proximale du collet 130. La figure 9 représente un tel mode de réalisation.

La bague 400 telle que présentée isolément sur la figure 5 présente une forme de manchon annulaire, ayant un diamètre interne D4i égal ou sensiblement supérieur au diamètre D4, et un diamètre externe D4e égal ou sensiblement égal au diamètre D3. La bague est typiquement formée en une seule pièce, par exemple en une seule pièce venue de matière par moulage et par usinage.

La bague 400 présente typiquement une longueur L400 supérieure ou égale à la longueur L40 de l'écrou 140 de l'élément de fixation 100 ou de l'écrou 340 de la rallonge 300.

Les figures 6 et 7 présentent l'assemblage de la bague 400 et de la rallonge 300 sur un élément de fixation 100, typiquement en considérant que l'élément de fixation 100 a été inséré dans un support tel qu'un arbre. On positionne alors la bague 400 de manière à venir entourer l'écrou 140 de l'élément de fixation 100. Le diamètre interne de la bague 400 est typiquement dimensionné de manière à venir emmancher la bague 400 autour de l'écrou 140 de manière à réaliser un centrage de la bague 400 autour de l'axe longitudinal X-X. On vient ensuite visser la rallonge 300 dans l'élément de fixation 100, ou plus précisément on vient visser la portion filetée 320 de la rallonge 300 dans le taraudage 150 de l'élément de fixation 100, typiquement jusqu'à ce que la rallonge 300 vienne enserrer la bague 400 entre le collet 130 de l'élément de fixation 100 et le collet 330 de la rallonge 300.

Dans la mesure où la bague 400, le collet 130 de l'élément de fixation 100 et le collet 330 de la rallonge 300 ont une même section externe, on obtient ainsi une surface externe continue et sensiblement lisse, aux arrondis près.

L'association de la bague 400 et de la rallonge 300 sur l'élément de fixation 100 permet ainsi de faire évoluer le dispositif au fur et à mesure de la croissance de l'arbre. En effet, au fur et à mesure de la croissance de l'arbre dans lequel l'élément de fixation 100 est inséré, le diamètre externe du tronc augmente, et le tronc vient progressivement envelopper l'élément de fixation 100, ce qui pourrait ensuite rendre inexploitable l'élément de fixation 100 ou nécessiter son remplacement.

Le système proposé permet alors de venir insérer une rallonge 300 à l'élément de fixation 100 tout en évitant grâce à la bague 400 de former des gorges ou cavités qui viendraient perturber la croissance de l'arbre. On peut ici venir mettre assembler successivement plusieurs rallonges 300 et bagues 400 de manière à obtenir la longueur souhaitée. On peut ensuite venir insérer un élément de liaison 200 tel que présenté sur les figures 2 et 3, typiquement avec ou sans cache 270, ou tout autre élément comprenant un filetage adapté pour coopérer avec le taraudage 350 d'une rallonge 300 et présentant une portion fonctionnelle 240.

Les différents éléments tels que proposés offrent ainsi un système de fixation et d'ancrage modulable, robuste et respectant les arbres dans lesquels les éléments de fixation 100 sont insérés en prenant en compte leur croissance.

Le système tel que proposé permet notamment d'éviter de devoir remplacer les éléments de fixation 100 du fait de la croissance de l'arbre. On comprend en effet que le remplacement de l'élément de fixation est plus dommageable pour l'arbre que l'ajout d'une rallonge telle que proposée. En outre, l'emploi d'une bague 400 telle que proposée permet de favoriser la croissance en évitant la formation de rugosités et irrégularités qui viendraient perturber le développement de l'arbre et potentiellement le fragiliser. De plus, en assurant une surface externe sensiblement continue, on conserve la possibilité de retirer l'élément de fixation 100 dans dégrader l'arbre, ce qui ne serait pas possible en l'absence de la bague 400 dans la mesure où l'arbre viendrait alors former un épaulement autour du collet 130 de l'élément de fixation 100, qui nécessiterait alors une destruction partielle pour retirer l'élément de fixation 100.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Elément de fixation (100) adapté pour être partiellement inséré dans un arbre, comprenant un corps s'étendant selon une direction longitudinale définie par un axe longitudinal (X-X), ledit corps comprenant successivement, depuis une extrémité proximale (102) vers une extrémité distale (104) selon la direction longitudinale :
- une portion filetée (120), adaptée pour être insérée dans un tronc d'arbre,
- un collet (130) et
- un écrou (140),
l'élément de fixation (100) comprenant un taraudage s'étendant depuis l'extrémité distale (104) dans un volume interne de l'écrou (140) et dans un volume interne du collet (130),
l'élément de fixation (100) étant formé en une seule pièce,
- la portion filetée (120) présentant un diamètre maximum D1 par rapport à l'axe longitudinal,
- le collet (130) présentant une section de diamètre compris entre D32 et D34 selon l'axe longitudinal, tels que D32≤D34, et D32 > 1,3 D1, l'écrou (140) présentant une section selon un plan perpendiculaire à l'axe longitudinal (X-X) inscrite dans un polygone régulier, ledit polygone régulier étant inscrit dans un cercle de diamètre D4, tel que D4 < D34, et D4 > D1, dans lequel le collet (130) présente
- une forme cylindrique de révolution, tel que D32 = D34,
ou
- une forme conique de révolution, tel que D32 < D34, le collet présentant une section croissante depuis une extrémité proximale de diamètre D32 vers une extrémité distale de diamètre D34.

2. Elément de fixation (001) selon la revendication 1, dans
lequel la portion filetée (120) comprend un filetage comprenant une pluralité de filets (125) séparés par une gorge (127), le filetage présentant un pas compris entre 7 et 11 mm,
lesdits filets (125) présentant une forme triangulaire avec un sommet (126) définissant un angle (A1) compris entre 35 et 45°,
la gorge (127) entre deux filets (125) successifs s'étendant selon une distance supérieure ou égale à 3mm,
chaque gorge (127) entre deux filets (125) successifs présentant deux pans inclinés définissant un angle (A2) compris entre 165° et 175°.

3. Elément de fixation (100) selon la revendication 2, dans lequel,
le filetage présentant un pas de 9 mm,
lesdits filets (125) présentant une forme triangulaire avec un sommet (126) définissant un angle (A1) égal à 40°,
la gorge (127) entre deux filets (125) successifs s'étendant selon une distance comprise entre 5 et 6 mm,
chaque gorge (127) entre deux filets (125) successifs présentant deux pans inclinés définissant un angle (A2) égal à 170°.

4. Ensemble comprenant :
- un élément de fixation (100) selon l'une des revendications 1 à 3,
- un élément de liaison (200), présentant un corps s'étendant selon une direction longitudinale définie par un axe longitudinal (X-X), ledit corps comprenant successivement, depuis une extrémité proximale (202) vers une extrémité distale (204) selon la direction longitudinale
* une portion filetée (220) adaptée pour être engagée dans le taraudage (150) de l'élément de fixation (100),
* un collet (230),
* un portion fonctionnelle (240),
ledit élément de liaison (200) étant formé en une seule pièce,
- une bague (400), adaptée pour venir envelopper partiellement la portion filetée (120) de l'élément de fixation (100).

5. Ensemble comprenant :
- un élément de fixation (100) selon l'une des revendications 1 à 3,
- une première bague (400), adaptée pour venir envelopper l'écrou (140) de l'élément de fixation (100),
- une rallonge (300), présentant un corps s'étendant selon une direction longitudinale définie par un axe longitudinal (X-X), ledit corps comprenant successivement, depuis une extrémité proximale (302) vers une extrémité distale (304) selon la direction longitudinale : une portion filetée (320), un collet (330) et un écrou (340),
dans lequel
la portion filetée (320) de la rallonge (300) est adaptée pour être engagée dans le taraudage (150) de l'élément de fixation (100),
le collet (130) de l'élément de fixation (100), le collet (330) de la rallonge (300) et la première bague (400) présentent une même section externe.

6. Ensemble selon la revendication 5, dans lequel la rallonge (300) présente un taraudage (350) s'étendant depuis l'extrémité distale (304) dans un volume interne de l'écrou (340) et dans un volume interne du collet (330).

7. Ensemble selon l'une des revendications 5 ou 6, comprenant
- un élément de liaison (200), présentant un corps s'étendant selon une direction longitudinale définie par un axe longitudinal (X-X), ledit corps comprenant successivement, depuis une extrémité proximale (202) vers une extrémité distale (204) selon la direction longitudinale
* une portion filetée (220) adaptée pour être engagée dans le taraudage (350) de la rallonge (300),
* un collet (230),
* un portion fonctionnelle (240),
ledit élément de liaison (200) étant formé en une seule pièce,
- une deuxième bague (400), adaptée pour venir envelopper partiellement la portion filetée (120) de l'élément de fixation (100).

## Patentansprüche

1. Befestigungselement (100), das geeignet ist, teilweise in einen Baum eingesetzt zu werden, umfassend einen Körper, der sich gemäß einer durch eine Längsachse (X-X) definierten Längsrichtung erstreckt, wobei der Körper nacheinander, von einem proximalen Ende (102) zu einem distalen Ende (104) gemäß der Längsrichtung umfasst:
- einen Gewindeteil (120), der zum Einsetzen in einen Baum geeignet ist,
- einen Bund (130) und
- eine Mutter (140),
wobei das Befestigungselement (100) ein Gewinde umfasst, das sich von dem distalen Ende (104) in einen Innenraum der Mutter (140) und in einen Innenraum des Bundes (130) erstreckt,
wobei das Befestigungselement (100) einstückig ausgebildet ist,
- wobei der Gewindeteil (120) einen maximalen Durchmesser D1 relativ zu der Längsachse aufweist,
- wobei der Bund (130) einen Querschnitt mit einem Durchmesser zwischen D32 und D34 gemäß der Längsachse aufweist, wobei gilt: D32 ≤ D34 und D32 > 1,3 D1,
wobei die Mutter (140) einen Querschnitt in einer zu der Längsachse (X-X) senkrechten Ebene aufweist, der in ein regelmäßiges Polygon eingeschrieben ist, wobei das regelmäßige Polygon in einen Kreis mit einem Durchmesser D4 eingeschrieben ist, wobei gilt: D4 < D34 und D4 > D1,
wobei der Bund (130) aufweist
- eine rotationszylindrische Form, wobei D32 = D34 gilt,
oder
- eine rotationskonische Form, wobei D32 < D34 gilt, wobei der Bund einen von einem proximalen Ende mit einem Durchmesser D32 zu einem distalen Ende mit einem Durchmesser D34 zunehmenden Querschnitt aufweist.

2. Befestigungselement (100) nach Anspruch 1, wobei der Gewindeteil (120) ein Gewinde umfasst, das eine Vielzahl von Gewindegängen (125) umfasst, die durch eine Nut (127) getrennt sind, wobei das Gewinde eine Steigung zwischen 7 und 11 mm aufweist,
wobei die Gewindegänge (125) eine dreieckige Form mit einer Spitze (126) aufweisen, die einen Winkel (A1) zwischen 35 und 45° definiert,
wobei sich die Nut (127) zwischen zwei aufeinanderfolgenden Gewindegängen (125) über eine Distanz von größer oder gleich 3 mm erstreckt,
wobei jede Nut (127) zwischen zwei aufeinanderfolgenden Gewindegängen (125) zwei geneigte Flanken aufweist, die einen Winkel (A2) zwischen 165° und 175° definieren.

3. Befestigungselement (100) nach Anspruch 2, wobei das Gewinde eine Steigung von 9 mm aufweist,
die Gewindegänge (125) eine dreieckige Form mit einer Spitze (126) aufweisen, die einen Winkel (A1) von gleich 40° definiert,
sich die Nut (127) zwischen zwei aufeinanderfolgenden Gewindegängen (125) über eine Distanz zwischen 5 und 6 mm erstreckt,
jede Nut (127) zwischen zwei aufeinanderfolgenden Gewindegängen (125) zwei geneigte Flanken aufweist, die einen Winkel (A2) von gleich 170° definieren.

4. Anordnung, umfassend:
- ein Befestigungselement (100) nach einem der Ansprüche 1 bis 3,
- ein Verbindungselement (200), das einen Körper aufweist, der sich gemäß einer durch eine Längsachse (X-X) definierten Längsrichtung erstreckt, wobei der Körper nacheinander, von einem proximalen Ende (202) zu einem distalen Ende (204) gemäß der Längsrichtung umfasst
* einen Gewindeteil (220), der zum Eingreifen in das Gewinde (150) des Befestigungselements (100) geeignet ist,
* einen Bund (230),
* einen Funktionsteil (240),
wobei das Verbindungselement (200) einstückig ausgebildet ist,
- einen Ring (400), der geeignet ist, den Gewindeteil (120) des Befestigungselements (100) teilweise zu umhüllen.

5. Anordnung, umfassend:
- ein Befestigungselement (100) nach einem der Ansprüche 1 bis 3,
- einen ersten Ring (400), der geeignet ist, die Mutter (140) des Befestigungselements (100) zu umhüllen,
- eine Verlängerung (300), die einen Körper aufweist, der sich gemäß einer durch eine Längsachse (X-X) definierten Längsrichtung erstreckt, wobei der Körper nacheinander, von einem proximalen Ende (302) zu einem distalen Ende (304) gemäß der Längsrichtung umfasst: einen Gewindeteil (320), einen Bund (330) und eine Mutter (340),
wobei
der Gewindeteil (320) der Verlängerung (300) geeignet ist, in das Gewinde (150) des Befestigungselements (100) einzugreifen,
der Bund (130) des Befestigungselements (100), der Bund (330) der Verlängerung (300) und der erste Ring (400) denselben äußeren Querschnitt aufweisen.

6. Anordnung nach Anspruch 5, wobei die Verlängerung (300) ein Gewinde (350) aufweist, das sich von dem distalen Ende (304) in einen Innenraum der Mutter (340) und in einen Innenraum des Bundes (330) erstreckt.

7. Anordnung nach einem der Ansprüche 5 oder 6, umfassend
- ein Verbindungselement (200), das einen Körper aufweist, der sich gemäß einer durch eine Längsachse (X-X) definierten Längsrichtung erstreckt, wobei der Körper nacheinander, von einem proximalen Ende (202) zu einem distalen Ende (204) gemäß der Längsrichtung umfasst
* einen Gewindeteil (220), der geeignet ist, in das Gewinde (350) der Verlängerung (300) einzugreifen,
* einen Bund (230),
* einen Funktionsteil (240),
wobei das Verbindungselement (200) einstückig ausgebildet ist,
- einen zweiten Ring (400), der geeignet ist, den Gewindeteil (120) des Befestigungselements (100) teilweise zu umhüllen.

## Claims

1. A fastening element (100) able to be partially inserted into a shaft, comprising a body extending according to a longitudinal direction defined by a longitudinal axis (X-X), said body comprising successively, from a proximal end (102) toward a distal end (104) according to the longitudinal direction:
- a threaded portion (120), able to be inserted into a tree trunk,
- a collar (130), and
- a nut (140),
the fastening element (100) comprising a tapped bore extending from the distal end (104) into an internal volume of the nut (140) and into an internal volume of the collar (130),
the fastening element (100) being formed in a single piece,
- the threaded portion (120) presenting a maximum diameter D1 relative to the longitudinal axis,
- the collar (130) presenting a section of diameter between D32 and D34 according to the longitudinal axis, such that D32 ≤ D34, and D32 > 1.3 D1,
the nut (140) presenting a section according to a plane perpendicular to the longitudinal axis (X-X) inscribed in a regular polygon, said regular polygon being inscribed in a circle of diameter D4, such that D4 < D34, and D4 > D1,
wherein the collar (130) presents
- a cylindrical shape of revolution, such that D32 = D34, or
- a conical shape of revolution, such that D32 < D34, the collar presenting a section increasing from a proximal end of diameter D32 toward a distal end of diameter D34.

2. The fastening element (100) according to claim 1, wherein the threaded portion (120) comprises a thread comprising a plurality of threads (125) separated by a groove (127), the thread presenting a pitch between 7 and 11 mm,
said threads (125) presenting a triangular shape with an apex (126) defining an angle (A1) between 35 and 45°,
the groove (127) between two successive threads (125) extending according to a distance greater than or equal to 3 mm,
each groove (127) between two successive threads (125) presenting two inclined flanks defining an angle (A2) between 165° and 175°.

3. The fastening element (100) according to claim 2, wherein,
the thread presenting a pitch of 9 mm,
said threads (125) presenting a triangular shape with an apex (126) defining an angle (A1) equal to 40°,
the groove (127) between two successive threads (125) extends according to a distance between 5 and 6 mm,
each groove (127) between two successive threads (125) presenting two inclined flanks defining an angle (A2) equal to 170°.

4. Assembly comprising:
- a fastening element (100) according to one of claims 1 to 3,
- a connecting element (200), presenting a body extending according to a longitudinal direction defined by a longitudinal axis (X-X), said body comprising successively, from a proximal end (202) toward a distal end (204) according to the longitudinal direction:
* a threaded portion (220) able to be engaged in the tapped bore (150) of the fastening element (100),
* a collar (230),
* a functional portion (240),
said connecting element (200) being formed in a single piece,
- a ring (400), able to partially surround the threaded portion (120) of the fastening element (100).

5. Assembly comprising:
- a fastening element (100) according to one of claims 1 to 3,
- a first ring (400), able to surround the nut (140) of the fastening element (100),
- an extension (300), presenting a body extending according to a longitudinal direction defined by a longitudinal axis (X-X), said body comprising successively, from a proximal end (302) toward a distal end (304) according to the longitudinal direction: a threaded portion (320), a collar (330), and a nut (340),
- wherein the threaded portion (320) of the extension (300) is able to be engaged in the tapped bore (150) of the fastening element (100),
the collar (130) of the fastening element (100), the collar (330) of the extension (300), and the first ring (400) presenting a same external section.

6. Assembly according to claim 5, wherein the extension (300) presents a tapped bore (350) extending from the distal end (304) into an internal volume of the nut (340) and into an internal volume of the collar (330).

7. Assembly according to one of claims 5 or 6, comprising
- a connecting element (200), presenting a body extending according to a longitudinal direction defined by a longitudinal axis (X-X), said body comprising successively, from a proximal end (202) toward a distal end (204) according to the longitudinal direction:
* a threaded portion (220) able to be engaged in the tapped bore (350) of the extension (300),
* a collar (230),
* a functional portion (240),
said connecting element (200) being formed in a single piece,
- a second ring (400), able to partially surround the threaded portion (120) of the fastening element (100).
